# EUROPEAN PATENT APPLICATION

(11) **EP 1 429 523 A1**
(43) Date of publication of application: **16.06.2004**
(21) Application number: 02293100.0
(22) Date of filing: 13.12.2002
(51) Int. Cl.: H04L 29/12

(54) **Public addressing supported by temporary private addressing**

(71) Applicant: ALCATEL, 75008 Paris (FR)
(72) Inventor: Dries, Johan Maria Frans, 2200 Herentals (BE)
(74) Representative: Plas, Axel

(57) **Abstract**

When transmitting signals from a source address in a first private domain (1) like a first Internet Service Provider via a public domain (3) to a destination address in a second private domain (2) like a second Internet Service Provider, it is inefficient to use public addresses like Internet Protocol version-4 addresses in private domains for defining users, connections, sessions when using the public domain (insight). The problem of only a limited number of public addresses being available for increasing demands is solved by temporarily generating, in response to a private address used in one private domain (1,2) for defining an address in an other private domain (2,1), a (fake or ghost) private address in said one private domain (1,2) and by using public addresses for defining borders between private domains (1,2) and public domains (3) (basic idea), with private addresses taking care of the routing within a private domain (1,2). Private domains (1,2) comprise border units (13,14,23,24).

## Description

The invention relates to a method for transmitting signals from a source address in a first domain via a public domain to a destination address in a second domain.

Said first domain for example comprises a first private network and/or a group of users or connections serviced by a first Internet Service Provider, said public domain for example comprises an Internet Network, and said second domain for example comprises a second private network and/or a group of users or connections serviced by a second Internet Service Provider.

A prior art method is generally known and is for example based upon either assigning one public address like for example an Internet Protocol version 4 or IPv4 address to a user for the duration of a session or assigning one public address via network address translation techologies to a pool of users.

The known method is disadvantageous, inter alia, due to only a limited number of public addresses being available for increasing demands.

It is an object of the invention, inter alia, of providing a method as defined in the preamble which solves the problem of said limited number of public addresses being available for increasing demands without increasing said limited number of public addresses.

The method according to the invention is characterised in that said method comprises the steps of
(a) in said first domain, in response to said destination address in said second domain, generating a temporary address in said first domain for routing signals in said first domain,
(b) in said first domain, in response to said temporary address in said first domain, generating said destination address in said second domain for signals leaving said first domain,
(c) in said first domain or in said public domain, adding a public source address defining at least a part of said first domain and adding a public destination address defining at least a part of said second domain,
(d) in said public domain or in said second domain, removing said public source address and removing said public destination address, and
(e) in said second domain, in response to said source address in said first domain, generating a temporary address in said second domain for routing signals in said second domain.

By introducing step (a), (traffic) signals like for example packets or cells etc. can be routed in said first private domain (in each private domain, only addresses of that private domain and public addresses can be used for routing). With step (b), for example at a border between said first private domain and said public domain, (traffic) signals are made ready to enter the public domain. Steps (c) and (d) allow the use of the public domain in a very efficient manner due to said public source address defining at least a part of said first private domain like for example said border and due to said public destination address defining at least a part of said second private domain like for example a border between said public domain and said second private domain (the number of borders between private domains and public domains will be much smaller than the number of users, connections, sessions etc.). With step (e), (traffic) signals can be routed in said second private domain.

A first embodiment of the method according to the invention is defined by claim 2.

By locating said source address (situated) in said first private domain and said temporary address (situated) in said first private domain and said destination address (situated) in said second private domain and said temporary address (situated) in said second private domain in parts of headers of a (traffic) signal like a packet or a cell, with said public source address and said public destination address in step (c) forming part of an outer header of said (traffic) signal like a packet or a cell, full transparency is offered to the public domain.

A second embodiment of the method according to the invention is defined by claim 3.

By letting steps (a) and (b) take place in a border unit in said first private domain, with step (e) taking place in a border unit in said second private domain, border units like for example border call servers and/or border gates for example comprising a Network Address Translator or NAT have got well defined tasks, and said tasks have been allocated effciently.

A third embodiment of the method according to the invention is defined by claim 4.

By introducing step (f), for signalling signals, in said first private domain or in said public domain, in response to a source address (situated) in said first private domain, a public source address is generated. With step (g), for signalling signals, in said public domain or in said second private domain, in response to a public destination address, a destination address (situated) in said second private domain is generated. As a result, the signalling signals will prepare both private domains for performing steps (a) to (e).

A fourth embodiment of the method according to the invention is defined by claim 5.

For said signalling signals, by letting said source address in said first private domain and said public source address define a border unit in said first private domain, with said public destination address and said destination address in said second private domain defining a border unit in said second private domain, the number of public addresses is used efficiently and the number of public addresses to be used is kept low. Further, said border units like for example border call servers and/or border gates for example comprising a Network Address Translator or NAT have got well defined tasks, and said tasks have been allocated effciently.

A fifth embodiment of the method according to the invention is defined by claim 6.

For said signalling signals, by letting step (f) take place in a border unit in said first private domain, with step (g) taking place in a border unit in said second private domain, border units like for example border call servers and/or border gates for example comprising a Network Address Translator or NAT have got well defined tasks, and said tasks have been allocated effciently.

The invention further relates to a server for use in a method as defined in claim 1.

The server according to the invention is characterised in that said server comprises a generator for, in response to said destination address in said second domain, generating said temporary address in said first domain for routing signals in said first domain.

Such a server comprises or forms part of a border unit like for example border call servers and/or border gates for example comprising a Network Address Translator or NAT etc.

The invention yet further relates to a processor program product for use in a server as defined in claim 7.

The processor program product according to the invention is characterised in that said processor program product comprises the function of, in response to said destination address in said second domain, generating said temporary address in said first domain for routing signals in said first domain.

The invention also relates to a further server for use in a method as defined in claim 1.

The further server according to the invention is characterised in that said further server comprises a generator for, in response to said source address in said first domain, generating said temporary address in said second domain for routing signals in said second domain.

Such a further server comprises or forms part of a border unit like for example border call servers and/or border gates for example comprising a Network Address Translator or NAT etc.

The invention yet also relates to a further processor program product for use in a further server as defined in claim 9.

The further processor program product according to the invention is characterised in that said further processor program product comprises the function of, in response to said source address in said first domain, generating a temporary address in said second domain for routing signals in said second domain.

Embodiments of the servers according to the invention and of the processor program products according to the invention correspond with the embodiments of the method according to the invention.

The invention is based upon an insight, inter alia, that it is inefficient to use public addresses in private domains for defining users, connections, sessions when using the public domain, and is based upon a basic idea, inter alia, that said public addresses should be used for defining borders between private domains and public domains, with private addresses taking care of the routing within a private domain, and whereby, in response to private addresses used in one domain for defining an address in an other domain, temporary (fake or ghost) private addresses in said one domain are generated for routing purposes.

The invention solves the problem, inter alia, of only said limited number of public addresses being available for increasing demands, and is advantageous, inter alia, in that this problem is solved without increasing said limited number of public addresses.

These and other aspects of the invention will be apparent from and elucidated with reference to the embodiments(s) described hereinafter.

Figure 1 illustrates in block diagram form a system comprising a first private domain, a public domain and a second private domain in which signalling signals are exchanged in accordance with the method according to the invention, and

Figure 2 illustrates in block diagram form a system comprising a first private domain, a public domain and a second private domain in which traffic signals are exchanged in accordance with the method according to the invention.

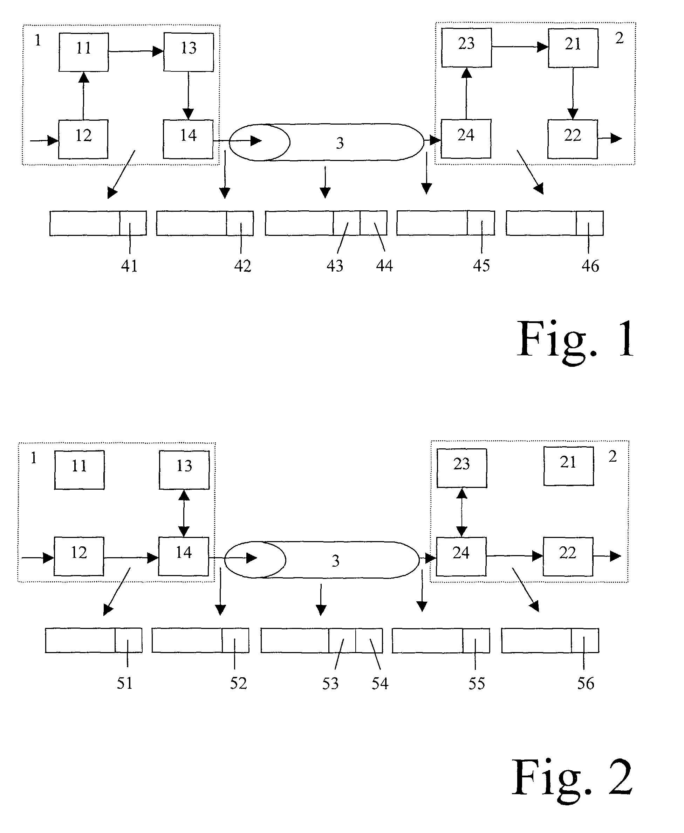

The system shown in Figure 1 (signalling situation) comprises a first private domain 1 like for example a first private network and/or a group of users or connections serviced by a first Internet Service Provider and a second private domain 2 like for example a second private network and/or a group of users or connections serviced by a second Internet Service Provider coupled to each other via a public domain 3 using Internet Protocol tunneling, like for example an Internet Protocol security (IPSec) tunnel, or a Multi Protocol Label Switching (MPLS) tunnel, etc.

First private domain 1 comprises a call server 11, a border call server 13, an access gate 12 like for example a Broadband Access Server etc. and a border gate 14, with an output of access gate 12 being coupled to an input of call server 11 and with an output of call server 11 being coupled to an input of border call server 13 and with an output of border call server 13 being coupled to an input of border gate 14 and with an output of border gate 14 being coupled to an input of public domain 3.

Second private domain 2 comprises a call server 21, a border call server 23, an access gate 22 like for example a Broadband Access Server etc. and a border gate 24, with an input of border gate 24 being coupled to an output of public domain 3 and with an output of border gate 24 being coupled to an input of border call server 23 and with an output of border call server 23 being coupled to an input of call server 21 and with an output of call server 21 being coupled to an input of access gate 22.

A signalling signal like for example a packet or a cell etc. flowing in first private domain 1 has a header 41, a signalling signal flowing from border gate 14 to public domain 3 has a header 42, a signalling signal flowing via public domain 3 has an inner header 43 and an outer header 44, a signalling signal flowing from public domain 3 to border gate 24 has a header 45, and a signalling signal flowing in second private domain 2 has a header 46.

Figure 1 particularly illustrates step (f) of, in said first private domain 1 or in said public domain 3, in response to a source address in said first private domain 1, generating a public source address, and step (g) of, in said public domain 3 or in said second private domain 2, in response to a public destination address, generating a destination address in said second private domain 2.

Header 41 for example comprises a source address being the address in the first private domain 1 of border call server 13 (like IP_{source} = privateIP_{bcs-source}), and for example comprises a destination address being the address in the public domain 3 of border call server 23 (like IP_{destination} = publicIP_{bcs-destination}).

Headers 42, 43 and 45 for example comprise a source address being the address in the public domain 3 of border call server 13 (like IP_{source} = publicIP_{bcs-} _{source}), and for example comprise a destination address being the address in the public domain 3 of border call server 23 (like IP_{destination} = publicIP_{bcs-destination}).

Header 46 for example comprises a source address being the address in the public domain 3 of border call server 13 (like IP_{source} = publicIP_{bcs-source}), and for example comprises a destination address being the address in the second private domain 2 of border call server 23 (like IP_{destination} = privateIP_{bcs-destination}).

Header 44 for example comprises a source address being the address in the public domain 3 of border call server 13 (like IP_{source} = publicIP_{bcs-source}), and for example comprises a destination address being the address in the public domain 3 of border call Server 23 (like IP_{destination} = publicIP_{bcs-destination}).

The address conversions from header 41 to header 42 and the adding of header 44 are for example done by border call server 13 and/or border gate 14, the removing of header 44 and the address conversions from header 45 to header 46 are for example done by border call server 23 and/or border gate 24. Thereto, border call servers 13,23 and/or border gates 14,24 will comprise generators for making said conversions.

So, said source address in said first private domain 1 and said public source address define border call server 13 in said first private domain 1, with said public destination address and said destination address in said second private domain 2 defining border call server 23 in said second private domain 2. Step (f) takes place in border call server 13 and/or border gate 14 in said first private domain 1, with step (g) taking place in border call server 23 and/or border gate 24 in said second private domain 2. Due to border call server 13 (23) and border gate 14 (24) becoming more and more integrated and often forming part of a border unit 13,14 (23,24), functions can be shifted from border call server to border gate and vice versa without departing from the scope of this invention.

The system shown in Figure 2 (traffic situation) corresponds with the system shown in Figure 1, with said signalling signals flowing in Figure 1 as indicated by the arrows between the blocks in Figure 1 also flowing in Figure 2 in the direction as indicated by said arrows between the blocks in Figure 1 and vice versa.

First private domain 1 comprises call server 11, border call server 13, access gate 12 like for example a Broadband Access Server etc. and border gate 14, with an input of access gate 12 being coupled to a terminalA and with an output of access gate 12 being coupled to an input of border gate 14 and with an output of border gate 14 being coupled to an input of public domain 3. Border gate 14 further communicates with border call server 13.

Second private domain 2 comprises call server 21, border call server 23, access gate 22 like for example a Broadband Access Server etc. and border gate 24, with an output of access gate 22 being coupled to a terminalB and with an input of access gate 22 being coupled to an output of border gate 24 and with an input of border gate 24 being coupled to an output of public domain 3. Border gate 24 further communicates with border call server 23.

A traffic signal like for example a packet or a cell etc. flowing in first private domain 1 has a header 51, a traffic signal flowing from border gate 14 to public domain 3 has a header 52, a traffic signal flowing via public domain 3 has an inner header 53 and an outer header 54, a traffic signal flowing from public domain 3 to border gate 24 has a header 55, and a traffic signal flowing in second private domain 2 has a header 56. It is suggested that a userA at terminalA in domain 1 (domainA) is transmitting signals to a userB at terminalB in domain 2 (domainB), in other words: userA @ domainA → userB @ domainB.

Figure 2 particularly illustrates step (a) of, in said first private domain 1, in response to said destination address in said second domain 2, generating a temporary address in said first domain 1 for routing signals in said first domain 1, and step (b) of, in said first private domain 1, in response to said temporary address in said first domain 1, generating said destination address in said second domain 2 for signals leaving said first domain, and step (c) of, in said first private domain 1 or in said public domain 3, adding a public source address defining at least a part of said first domain 1 and adding a public destination address defining at least a part of said second domain 2, and step (d) of, in said public domain 3 or in said second private domain 2, removing said public source address and removing said public destination address, and step (e) of, in said second private domain 2, in response to said source address in said first private domain 1, generating a temporary address in said second private domain 2 for routing signals in said second private domain 2 (whereby it should be noted that in each (private) domain, only addresses of this (private) domain and public addresses can be used for routing, the addresses of an other (private) domain can not be used in this (private) domain for routing).

Header 51 for example comprises a source address being the address in first private domain 1 (domainA) of userA: userA @ domainA (IP_{source} = privateIP_{userA@domainA}), and for example comprises a destination address being the temporary address in first private domain 1 (domainA) of userB : userB @ domainA (IP_{destination} = temporary-privateIP_{userB@domainA}).

Headers 52, 53 and 55 for example comprise a source address being the address in first private domain 1 (domainA) of userA: userA @ domainA (IP_{source} = privateIP_{userA@domainA}), and for example comprise a destination address being the address in second private domain 2 (domainB) of userB: userB @ domainB (IP_{source} = privateIP_{userB@domainB}).

Header 56 for example comprises a source address being the temporary address in second private domain 2 (domainB) of userA: userA @ domainB (IP_{source} = temporary-privateIP_{userA@domainB}), and for example comprises a destination address being the address in second private domain 2 (domainB) of userB : userB @ domainB (IP_{destination} = privateIP_{userB@domainB}).

Header 54 for example comprises a source address being the address in the public domain 3 of border gate 14 (IP_{source} = publicIP_{bg-source}), and for example comprises a destination address being the address in the public domain 3 of border gate 24 (like IP_{destination} = publicIP_{bg-destination}).

The address conversions from header 51 to header 52 and the adding of header 54 are for example done by border call server 13 and/or border gate 14, the removing of header 54 and the address conversions from header 55 to header 56 are for example done by border call server 23 and/or border gate 24. The address conversions from userA @ domainA and userB @ domainB to header 51 are for example done by border call server 13 and/or border gate 14 etc. Thereto, border call servers 13,23 and/or border gates 14,24 will comprise generators for making said conversions. Border call servers 13,23 and/or border gates 14,24 will further comprise generators for generating said temporary private addresses (which generators for example correspond with prior art generators for assigning (non-temporary) private addresses whereby the difference is situated in the duration of said assigning).

Step (a) takes place in border call server 13 in said first private domain 1 and step (b) takes place in border gate 14 in said first private domain 1, with step (d) taking place in border gate 24 in said second private domain 2 and step (e) taking place in border call server 23 in said second private domain 2. However, due to border call server 13 (23) and border gate 14 (24) becoming more and more integrated and often forming a part of a border unit 13,14 (23,24), functions can be shifted from border call server to border gate and vice versa without departing from the scope of this invention.

The server according to the invention comprises a generator for, in response to said destination address in said second private domain 2 (userB @ domainB), generating said temporary address in said first private domain 1 (userB @ domainA) for routing signals in said first private domain 1. Such a server comprises or forms part of border call server 13 and/or border gate 14 etc.

The further server according to the invention comprises a generator for, in response to said source address in said first private domain 1 (userA @ domainA), generating said temporary address in said second private domain 2 (userA @ domainB) for routing signals in said second private domain 2. Such a server comprises or forms part of border call server 23 and/or border gate 24 etc.

Summarizing, for the signalling signals (like for example the setting up of an audio call or an audio/video call etc.) the border call server and/or the border gate (in particular the NAT) has a more static behaviour (configurated in a semi-permanent way), for the traffic data (like for example an audio call or an audio/video call etc.) the NAT has a more dynamical behaviour, with the border call server, in response to signalling signals, configuring the NAT in the border gate (generating and storing temporary private addresses and indicating the conversions to be made) for the duration of a session (the audio call or the audio/video call etc.) and adapting the signalling such that terminals are informed about the temporary private addresses etc. After the session (the audio call or the audio/video call etc.) has been finished, the dynamical entry is removed from the NAT by the border call server and the temporary private address can then be used for a next session.

The expression "for" in for example "for transmitting" and "for converting" etc. does not exclude that other functions are performed as well, simultaneously or not. The steps (a) - (g) do not exclude that other steps are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities. Other addresses than Uniform Resource Locators and IP-addresses and other signals than packets and cells and other and further and wired or wireless connections, couplings and domain-units are not to be excluded.

The invention is based upon an insight, inter alia, that it is inefficient to use public addresses in private domains for defining users, connections, sessions when using the public domain, and is based upon a basic idea, inter alia, that said public addresses should be used for defining borders between private domains and public domains, with private addresses taking care of the routing within a private domain, and whereby, in response to private addresses used in one domain for defining an address in an other domain, temporary (fake or ghost) private addresses in said one domain are generated for routing purposes.

The invention solves the problem, inter alia, of only said limited number of public addresses being available for increasing demands, and is advantageous, inter alia, in that this problem is solved without increasing said limited number of public addresses.

## Claims

1. Method for transmitting signals from a source address in a first domain (1) via a public domain (3) to a destination address in a second domain (2), **characterised in that** said method comprises the steps of
(a) in said first domain (1), in response to said destination address in said second domain (2), generating a temporary address in said first domain (1) for routing signals in said first domain (1),
(b) in said first domain (1), in response to said temporary address in said first domain (1), generating said destination address in said second domain (2) for signals leaving said first domain,
(c) in said first domain (1) or in said public domain (3), adding a public source address defining at least a part of said first domain (1) and adding a public destination address defining at least a part of said second domain (2),
(d) in said public domain (3) or in said second domain (2), removing said public source address and removing said public destination address, and
(e) in said second domain (2), in response to said source address in said first domain (1), generating a temporary address in said second domain (2) for routing signals in said second domain (2).

2. Method according to claim 1, **characterised in that** said source address in said first domain (1) and said temporary address in said first domain (1) and said destination address in said second domain (2) and said temporary address in said second domain (2) form parts of headers (51,52,53,55,56), with said public source address and said public destination address in step (c) forming part of an outer header (54).

3. Method according to claim 1 or 2, **characterised in that** steps (a) and (b) take place in a border unit (13,14) in said first domain (1), with step (e) taking place in a border unit (23,24) in said second domain (2).

4. Method according to claim 1, 2 or 3, **characterised in that** said method comprises the steps of
(f) in said first domain (1) or in said public domain (3), in response to a source address in said first domain (1), generating a public source address, and
(g) in said public domain (3) or in said second domain (2), in response to a public destination address, generating a destination address in said second domain (2).

5. Method according to claim 4, **characterised in that** said source address in said first domain (1) and said public source address define a border unit (13,14) in said first domain (1), with said public destination address and said destination address in said second domain (2) defining a border unit (23,24) in said second domain (2).

6. Method according to claim 4 or 5, **characterised in that** step (f) takes place in a border unit (13,14) in said first domain (1), with step (g) taking place in a border unit (23,24) in said second domain (2).

7. Server for use in a method as defined in claim 1, **characterised in that** said server comprises a generator for, in response to said destination address in said second domain (2), generating said temporary address in said first domain (1) for routing signals in said first domain (1).

8. Processor program product for use in a server as defined in claim 7, **characterised in that** said processor program product comprises the function of, in response to said destination address in said second domain (2), generating said temporary address in said first domain (1) for routing signals in said first domain (1).

9. Further server for use in a method as defined in claim 1, **characterised in that** said further server comprises a generator for, in response to said source address in said first domain (1), generating said temporary address in said second domain (2) for routing signals in said second domain (2).

10. Further processor program product for use in a further server as defined in claim 9, **characterised in that** said further processor program product comprises the function of, in response to said source address in said first domain (1), generating a temporary address in said second domain (2) for routing signals in said second domain (2).
